# EUROPEAN PATENT APPLICATION

(11) **EP 3 672 202 A1**
(43) Date of publication of application: **24.06.2020**
(21) Application number: 18215018.5
(22) Date of filing: 21.12.2018
(51) Int. Cl.: H04L 29/08

(54) **INTERNET-OF-THINGS-BASED COMPUTER ON/OFF CONTROL EXPANSION DEVICE AND COMPUTER ON/OFF CONTROL SYSTEM**

(71) Applicant: Dongguan Evn Electronics Co., Ltd., Sanzhong Village Qingxi Town, Dongguan City, Guangdong Province (CN)
(72) Inventor: OU, Li-Hui, Guangdong Province (CN); CHEN, Hank Ching-Tsung, Guangdong Province (CN)
(74) Representative: 2K Patentanwälte Blasberg Kewitz & Reichel

(57) **Abstract**

An Internet-of-Things-based (IoT-based) computer on/off control expansion device (10) and a computer on/off control system (300). The computer on/off control expansion device (10) includes a signal line group (11) and a control module (12). The signal line group (11) includes a transmission line (111), and a signal bus (113) connected to a motherboard (20) and informationally connected to a casing power control line (215) and the transmission line (111). The signal bus (113) outputs an on/off signal (114 or 212) transmitted by the casing power control line (215) or the transmission line (111) to the motherboard (20). The control module (12) is connected to the transmission line (111), and includes a power receiving unit (121), a control unit (122) connected to the power receiving unit (121), and a mobile hotspot communication unit (123) connected to the power receiving unit (121) and receiving a control signal (31) from an Internet (30) to cause the control unit (122) to send the on/off signal (114 or 212).

## Description

### FIELD OF THE INVENTION

The present invention relates to a computer on/off control expansion device and a computer on/off control system, and particularly to a computer on/off control expansion device and a computer on/off control system that turn on/off a computer via a control signal received through a mobile hotspot.

### BACKGROUND OF THE INVENTION

With the rise of smart home appliances, many computer peripheral and accessory manufacturers have successively launched voice remote activation modules for computers, such as that disclosed by Taiwan Patent No. M512876.

However, the concept of the voice remote activation modules for computers is connecting to a motherboard by only one signal line and turning on or off the computer through a specific program of mobile device; therefore, the on/off management of the voice remote activation module for the computer need to constantly judge whether the computer is turned on, which resulted in unnecessary power consumption. In addition, because the said concept is limited to installation inside a computer panel, a network connection would be limited due to material interference. Moreover, in the said concept, all signal line groups need to first pass through a signal processing module and then be connected to a motherboard, which is different from the configuration of motherboards of current market available computers. To install a voice remote activation module, excessive modifications are required on lines and wires in a casing, hence causing installation inconveniences. Even if such modifications are achieved, the integration of line groups may also lead to signal interference. Furthermore, the said concept does not explain an available power supply; therefore, the computer voice remote activation module for computers remains incapable of receiving a control signal from a network when the computer is turned-off.

### SUMMARY OF THE INVENTION

It is a primary object of the present invention to resolve the issue of excessive modifications required on computer lines and wires during the installation of a conventional voice remote activation module for computer.

To achieve the above object, the present invention provides an Internet-of-Things-based (IoT-based) computer on/off control expansion device including a signal line group and a control module. The signal line group includes a transmission line, and a signal bus connected to a motherboard and informationally connected to a casing power control line and the transmission line. The signal bus outputs an on/off signal transmitted by the casing power control line or the transmission line to the motherboard. The control module is connected to the transmission line, and includes a power receiving unit receiving external power, a control unit connected to the power receiving unit, and a mobile hotspot communication unit connected to the power receiving unit and receiving a control signal from an Internet to cause the control unit to send the on/off signal. The control signal is generated by a cloud server interpreting an operation signal sent from a smartphone or a voice assistant.

In one embodiment, the signal bus is connected to an on/off control port of the motherboard.

In one embodiment, the control module includes a power transmission line connected to the power receiving unit and a Universal Serial Bus (USB) belonged to the motherboard.

The present invention further provides an Internet-of- Things -based (IoT-based) computer on/off control system including a computer on/off control expansion device and a cloud server. The computer on/off control expansion device includes a signal line group and a control module connected to the signal line group. The signal line group includes a transmission line, and a signal bus connected to a motherboard and informationally connected to a casing power control line and the transmission line. The signal bus outputs an on/off signal transmitted by the casing power control line or the transmission line to the motherboard. The control module is connected to the transmission line, and includes a power receiving unit receiving external power, a control unit connected to the power receiving unit, and a mobile hotspot communication unit connected to the power receiving unit and receiving a control signal from an Internet to cause the control unit to send the on/off signal. The cloud server includes a receiving unit receiving an operation signal transmitted by a smartphone or a voice assistant through the Internet, an operation interpreting unit connected to the receiving unit and interpreting the operation signal to generate a control signal, and a transmitting unit connected to the operation interpreting unit and sending the control signal to the mobile hotspot communication unit.

In one embodiment, the signal bus is connected to an on/off control port of the motherboard.

In one embodiment, the control module includes a power transmission line connected to the power receiving unit and a Universal Serial Bus (USB) belonged to the motherboard.

In one embodiment, the receiving unit is connected to a smartphone through the Internet, and the operation signal is generated by the smartphone or the voice assistant.

In one embodiment, the operation interpreting unit includes a voice recognition database for analyzing voice messages.

In one embodiment, the computer on/off control expansion device includes a power transmission line, which is connected to the control module and an operating power output terminal belonged to a power supply to enable the control module to learn whether a computer is turned on through judging whether an operating power is generated.

With the above disclosure of the present invention, the present invention provides the following features compared to the prior art. During installation of the computer on/off control expansion device of the present invention, computer lines and wires do not need to be modified, allowing a consumer to easily and readily complete the installation. Further, when a computer is turned off, the computer on/off control expansion device of the present invention is still capable of receiving the on/off signal through a mobile hotspot. Furthermore, the present invention achieves monitoring of an on/off status of a computer through a simple line and wire configuration.

### BRIEF DESCRIPTION OF THE DRAWINGS

Fig. 1 is a schematic diagram of a configuration according to an embodiment of the present invention;
Fig. 2 is a schematic diagram of units of a computer on/off control expansion device according to an embodiment of the present invention;
Fig. 3 is an implementation schematic diagram of controlling a computer on/off control expansion device by a smart phone;
Fig. 4 is an implementation schematic diagram of directly controlling a computer on/off control expansion device by a voice assistant through the Internet;
Fig. 5 is implementation schematic diagram of controlling a computer on/off control expansion device by a voice assistant through an Internet-of-Things cloud (IoT cloud); and
Fig. 6 is a schematic diagram of units of a computer on/off control expansion device according to another embodiment of the present invention.

### DETAILED DESCRIPTION OF THE PREFERRED EMBODIMENTS

Details and technical contents of the present invention are given with the accompanying drawings below.

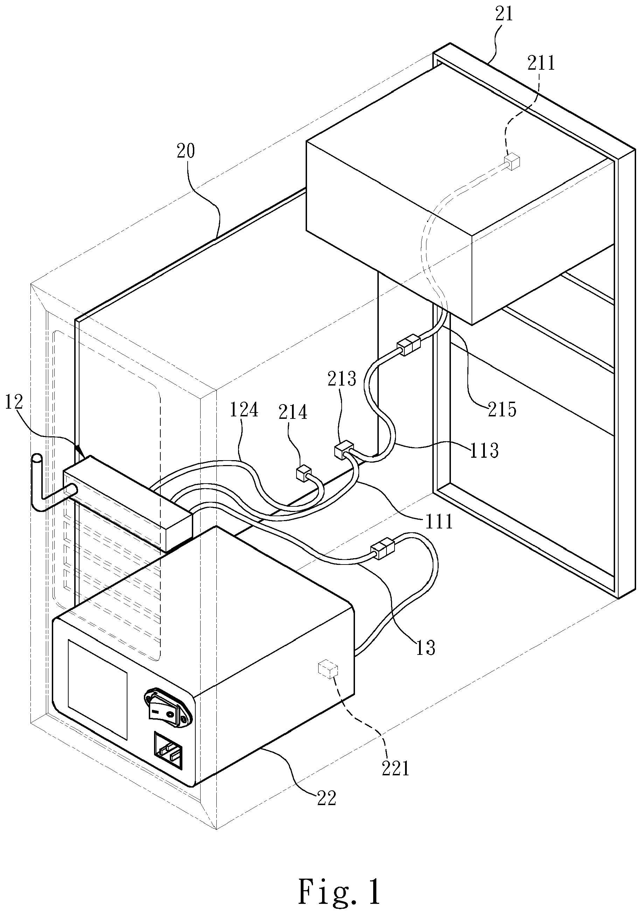

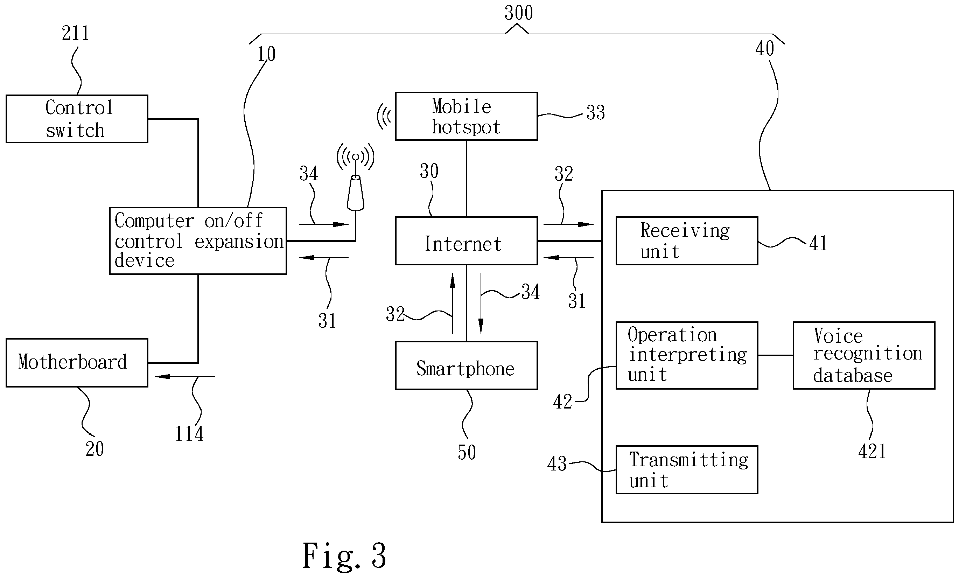

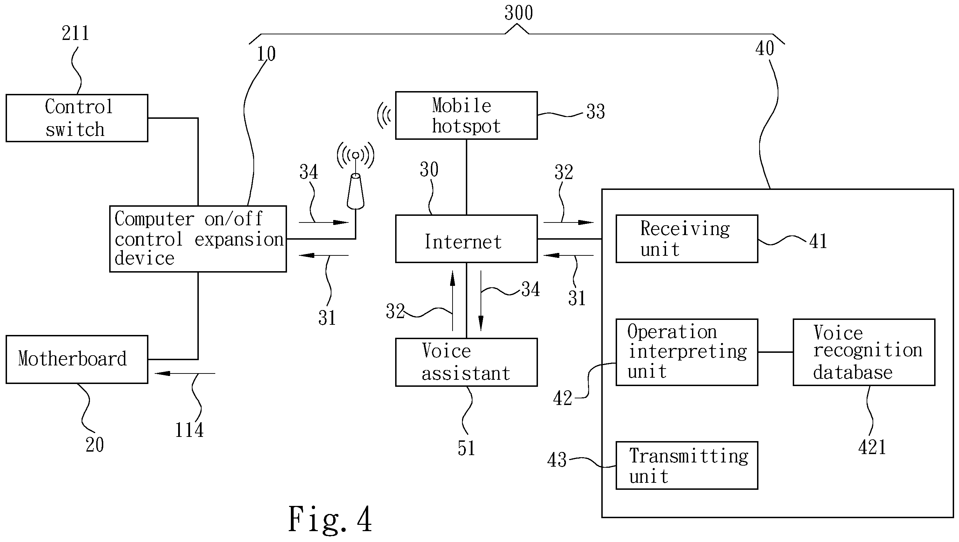

Referring to Figs. 1, 2, 3, and 4, the present invention provides an Internet-of-Things-based (IoT-based) computer on/off control expansion device 10 including a signal line group 11 and a control module 12. The signal line group 11 includes a transmission line 111, and a signal bus 113 connected to a motherboard 20 and informationally connected to a casing power control line 215 and the transmission line 111. The casing power control line 215 is an existing line of a casing 21, and is connected to a control switch 211. If the casing power control line 215 is not implemented in conjunction with the present invention, the casing power control line 215 is directly connected to the motherboard 20, and transmits an on/off signal 212 generated from operating the control switch 211. Further, the signal bus 113 outputs an on/off signal 212 (or 114) transmitted by the casing power control line 215 or the transmission line 111 to the motherboard 20. Further, the signal line group 11 is designed to always forward the on/off signal 114 (or 212) to the motherboard 20 regardless of the origin of the on/off signal 114 (or 212). That is to say, the computer on/off control expansion device 10 of the present invention does not interfere with the original activation mode of the computer, and is not required to first determine an on/off status of the computer during the forwarding of the on/off signal 114 (or 212). Further, the signal bus 113 is connected to an on/off control port 213 of the motherboard 20.

Moreover, the control module 12 is connected to the transmission line 111, and the control module 12 includes a power receiving unit 121 receiving external power, a control unit 122 connected to the power receiving unit 121, and a mobile hotspot communication unit 123 connected to the power receiving unit 121 and receiving a control signal 31 from an Internet 30 to cause the control unit 122 to send the on/off signal 114. In one embodiment, the control module 12 includes a power transmission line 124 connected to the power receiving unit 121 and an Universal Serial Bus (USB) 214 belonged to the motherboard 20. The power transmission line 124 obtains power from the USB 214 to provide the power to the power receiving unit 121. Further, when the computer is not turned on, its power supply 22 can still output a standby power (usually referred to as 5V standby) to the on/off control port 213 to enable the control module 12 to stay functional when the computer is turned off. Further, the control unit 122 can be configured to send the on/off signal 114 through the transmission line 111 when the mobile hotspot communication unit 123 sends the control signal 31. Further, the control unit 122 can be memorized in advance with a memory code implementing the foregoing operation. Further, the mobile hotspot communication unit 123 can join a mobile hotspot (e.g., WiFi) 33 through verification, so as to connect to the Internet 30 through the mobile hotspot 33. Further, the control signal 31 is generated by a cloud server 40 interpreting an operation signal 32 sent by a smartphone 50 or a voice assistant 51. In the description, the term "interpret" may be reading an instruction included in the operation signal 32 or parsing a voice instruction included in the operation signal 32.

At this point, when the installation of the computer on/off control expansion device 10 is completed, the control switch 211 on the casing 21 can still be normally used to turn on the computer. When the computer is turned off, the computer on/off control expansion device 10 waits for an extended period of time for the control signal 31 from the Internet 30 by using of the control module 12. When the mobile hotspot communication unit 123 obtains the control signal 31 through the mobile hotspot 33, the control unit 122 subsequently sends the on/off signal 212 to turn on the computer.

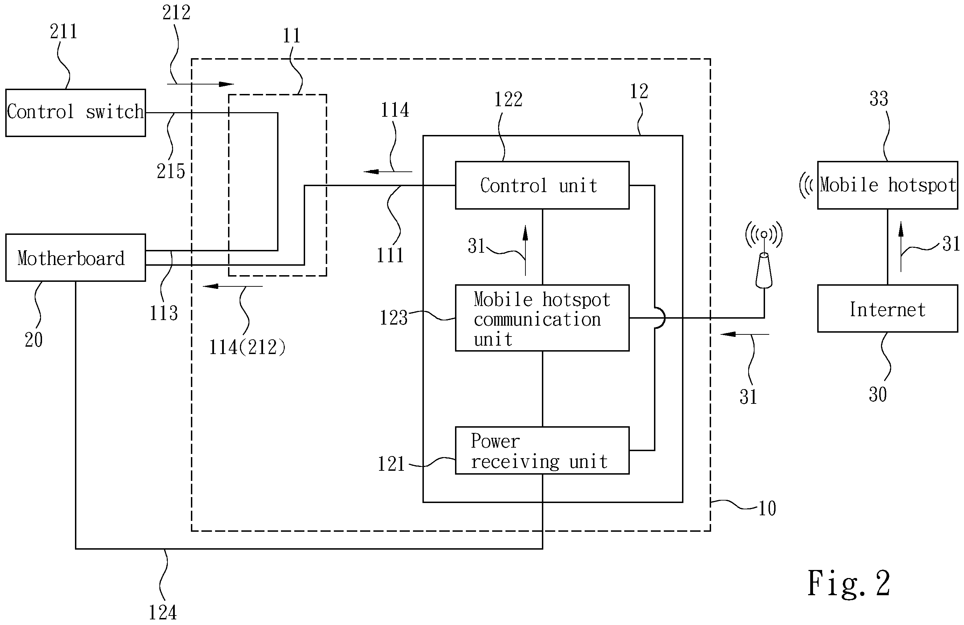

Referring to Figs. 2, 3, 4, and 5, in addition to the above, the present invention further provides an Internet-of-Things-based (IoT-based) computer on/off control system 300. Apart from including the foregoing computer on/off control expansion device 10, the computer on/off control system 300 further includes the cloud server 40. The cloud server 40 includes a receiving unit 41 receiving the operation signal 32 through the Internet 30, an operation interpreting unit 42 connected to the receiving unit 41 and parsing the operation signal 32 to generate the control signal 31, and a transmitting unit 43 connected to the operation interpreting unit 42 and sending the control signal 31 to the mobile hotspot communication unit 123. The cloud server 40 is implemented by an associated component or a pre-written computer-readable medium, and the receiving unit 41 and the transmitting unit 43 are respectively capable of connecting to the Internet 30. In one embodiment, the receiving unit 41 can be connected to a smartphone 50 through the Internet 30; the operation signal 32 can be generated by a mobile application (commonly referred to as an "APP") run on the smartphone 50, or be generated by a voice capturing element of the smartphone 50 or the voice assistant 51, that is, the operation signal 32 may be a operation signal. Further, in implementation, the smartphone 50 or the voice assistant 51 can be informationally connected with the cloud server 40 through a pre-loaded communication software. Further, the operation interpreting unit 42 may further include a voice recognition database 421, and parses each operation signal 32 in form of a voice signal by using a plurality of sets of voice sample data pre-stored in the voice recognition database 421. Details of such voice control are given below. The operation interpreting unit 42 determines whether the operation signal 32 contains semantic meaning of turning on a computer, and if it is determined that the operation signal 32 contains the above semantic meaning, sends the control signal 31 to the transmitting unit 43 and causes the transmitting unit 43 to send the control signal 31 to the control module 12 so as to turn on the computer.

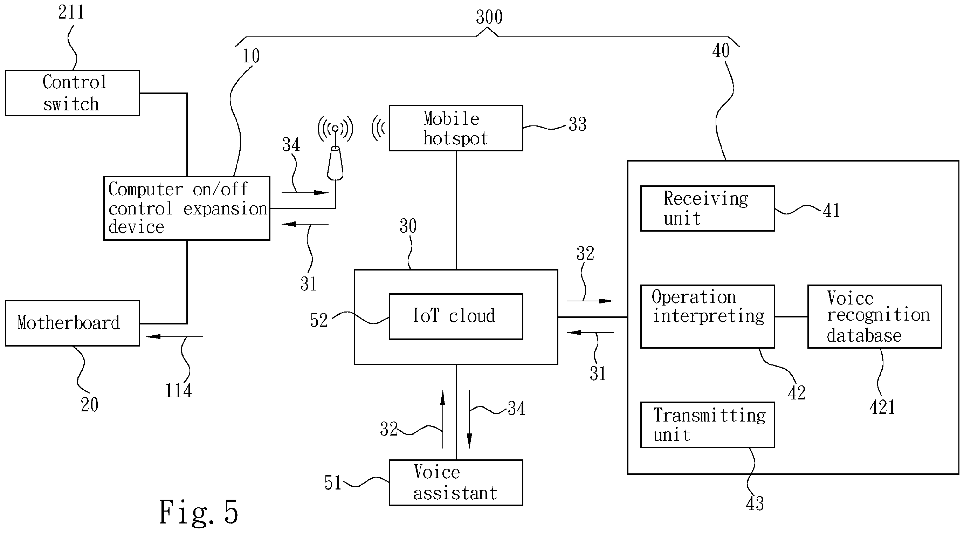

Referring to Fig. 5, in one embodiment, an information transmission path of the voice assistant 51 can be passed through an IoT cloud 52 coordinating with the voice assistant 51 to the cloud server 40, wherein the IoT cloud 52 can be a Skill IoT cloud or an Amazon IoT cloud.

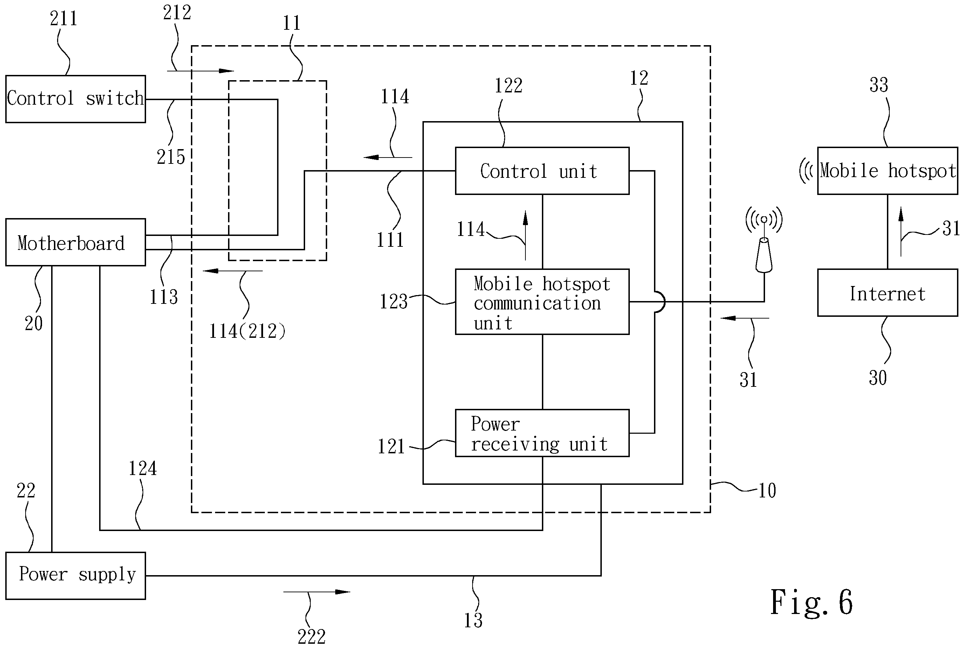

Referring to Fig. 1 and Fig. 6, in one embodiment, the computer on/off control expansion device 10 includes a power transport line 13 connected to the control module 12 and an operating power output terminal 221 belonged to a power supply 22. The operating power output terminal 221 is an exit of an operating power 222 outputted by the power supply 22, and the so-called operating power 222 is 12V of the ATX power specifications. Further, when the control module 12 obtains the operating power 222 from the power transport line 13, a push signal 34 is sent to the Internet 30 through the mobile hotspot communication unit 123, so as to transmit the push signal 34 to the smartphone 50 or the voice assistant 51, to cause the smartphone 50 or the voice assistant 51 notify the user whether the computer is currently turned on. Accordingly, the user can receive a computer turn-on status at irregular intervals through the push setting of the smartphone 50 or the voice assistant 51. For example, if the computer is turned on by an unauthorized individual, the computer can be turned off through the computer on/off control expansion device 10.

## Claims

1. An Internet-of-Things-based (IoT-based) computer on/off control expansion device (10), comprising:
a signal line group (11), comprising a transmission line (111), and a signal bus (113) connected to a motherboard (20) and informationally connected to a casing power control line (215) and the transmission line (111), the signal bus (113) outputting an on/off signal (114 or 212) transmitted by the casing power control line (215) or the transmission line (111) to the motherboard (20); and
a control module (12), connected to the transmission line (111), the control module (12) comprising a power receiving unit (121) receiving external power, a control unit (122) connected to the power receiving unit (121), and a mobile hotspot communication unit (123) connected to the power receiving unit (121) and receiving a control signal (31) from an Internet (30) to cause the control unit (122) to send the on/off signal (114 or 212), wherein the control signal (31) is generated by a cloud server (40) interpreting an operation signal (32) sent from a smart phone (50) or a voice assistant (51).

2. The IoT-based computer on/off control expansion device (10) of claim 1, wherein the signal bus (113) is connected to an on/off control port (213) of the motherboard (20).

3. The IoT-based computer on/off control expansion device (10) of claim 1 or 2, wherein the control module (12) comprises a power transmission line (124) connected to the power receiving unit (121) and a Universal Serial Bus (USB) (214) belonged to the motherboard (20).

4. The IoT-based computer on/off control expansion device (10) of claim 1 or 2 or 3, further comprising a power transport line (13), wherein the power transport line (13) is connected to the control module (12) and an operating power output terminal (221) belonged to a power supply (22) to enable the control module (12) to learn whether a computer is turned on through judging whether an operating power (222) is generated.

5. An Internet-of-Things-based (IoT-based) computer on/off control system (300), comprising:
a computer on/off control expansion device (10), comprising a signal line group (11) and a control module (12) connected to the signal line group (11); the signal line group (11) comprising a transmission line (111), and a signal bus (113) connected to a motherboard (20) and informationally connected to a casing power control line (215) and the transmission line (111); the signal bus (113) outputting an on/off signal (114 or 212) transmitted by the casing power control line (215) or the transmission line (111) to the motherboard (20); the control module (12) connected to the transmission line (111), and the control module (12) comprising a power receiving unit (121) receiving external power, a control unit (122) connected to the power receiving unit (121), and a mobile hotspot communication unit (123) connected to the power receiving unit (121) and receiving a control signal (31) from an Internet (30) to cause the control unit (122) to send the on/off signal (114 or 212); and
a cloud server (40), comprising a receiving unit (41) receiving a operation signal (32) sent from a smartphone (50) or a voice assistant (51) through the Internet (30), an operation interpreting unit (42) connected to the receiving unit (41) and parsing the operation signal (32) to generate a control signal (31), and a transmitting unit (43) connected to the operation interpreting unit (42) and sending the control signal (31) to the mobile hotspot communication unit (123).

6. The IoT-based computer on/off control system (300) according to claim 5, wherein the signal bus (113) is connected to an on/off control port (213) of the motherboard (20).

7. The IoT-based computer on/off control system (300) according to claim 5 or 6, wherein the control module (12) comprises a power transmission line (124) connected to the power receiving unit (121) and a Universal Serial Bus (USB) (214) belonged to the motherboard (20).

8. The IoT-based computer on/off control system (300) according to any of the claims 5 to 7, wherein the operation signal (32) is generated by the smartphone (50) or the voice assistant (51).

9. The IoT-based computer on/off control system (300) according to any of the claims 5 to 8, wherein the operation interpreting unit (42) comprises a voice recognition database (421) for analyzing a voice message.

10. The IoT-based computer on/off control system (300) according to any of the claims 5 to 9, wherein the computer on/off control expansion device (10) further comprises a power transport line (13), which is connected to the control module (12) and an operating power output terminal (221) belonged to a power supply (22) to enable the control module (12) to learn whether a computer is turned on through judging whether an operating power (222) is generated.
